# EUROPEAN PATENT SPECIFICATION

(11) **EP 1 107 251 B1**
(45) Date of publication and mention of the grant of the patent: **11.11.2009**
(21) Application number: 00920752.3
(22) Date of filing: 19.04.2000
(51) Int. Cl.: G11B 23/28, G06F 1/00

(54) **METHOD FOR CD-ROM RECORDING AND READING PREVENTING COPYING THEREOF**
CD-ROM AUFZEICHNUNGS-UND WIEDERGABEVERFAHREN MIT KOPIERSCHUTZ
PROCEDE D'ENREGISTREMENT ET DE LECTURE D'UN CD-ROM PERMETTANT D'EVITER SA COPIE

(30) Priority: 20.04.1999 ES 9900812
(43) Date of publication of application: 13.06.2001
(73) Proprietor: Sonopress Ibermemory S.A,., 28820 Coslada (ES)
(72) Inventor: CHINARRO JIMENEZ, Angel, E-28820 Coslada (ES)
(74) Representative: Elzaburu Marquez, Alberto
(86) International application number: PCT/ES2000/000146
(87) International publication number: WO 2000/063910

(56) References cited:
- WO-A1-97/15051
- WO-A1-98/20492
- US-A- 5 703 858

## Description

### OBJECT OF THE INVENTION

The invention refers to a method for CD-ROM recording and reading whose purpose is to prevent the subsequent copying of the previously manufactured CD-ROM.

The invention is applicable to the recording and playing of any CD-ROM format.

### BACKGROUND OF THE INVENTION

The prior art widely reveals the use of CD-ROM, on which information is written physically in the form of pits. The pits are differences of reliefs on the surface of the disk that are arranged one after the other in order to form all the information of the disk, in such a way that the CD-ROM readers are provided with a laser that is focused on the surface of the disk, whereby said laser is reflected in such a way that said radiation can be detected by a laser photodetector. When the laser strikes a pit, it is not reflected on the photodetector, in such a way that this determines that the reader can interpret the information contained in the disk. There are eight different pit lengths, that are standardized, for the purpose of constructing a complete value code capable of representing data at a suitable resolution.

From the logical point of view the information is organized as files, in such a way that the positions of these files are included in an index called the table of contents, that is located at the beginning of the CD-ROM. In this way, if one wishes to have access to a specific file, the reader will consult its position in the table of contents in order to locate it.

Generally among the contents of a CD-ROM there are executable files, that constitute sequences of orders and instructions that imply, among other actions, the loading and execution of other files different from the executable one. Therefore, the navigation on the CD-ROM and the access to the files is always determined by the approach of the execution of the application that the programmer has wanted to make in each case. The application searches and loads only and exclusively the files that the programmer has planned to access.

In order to manufacture a CD-ROM, a data medium is used, the data medium storing the contents of a CD-ROM (such as hard disks, Exabyte tape, CD-R, etc.) and then the process of transferring the information from said medium to a crystal by a productive process known as mastering starts.

Said mastering process basically consists of transferring information from the data input medium (hard disks, Exabyte tape, CD-R, etc.) onto a lacquer layer that is deposited on the crystal. The information is transmitted in the form of laser pulses that define, in the form of different reliefs, the information of the data source.

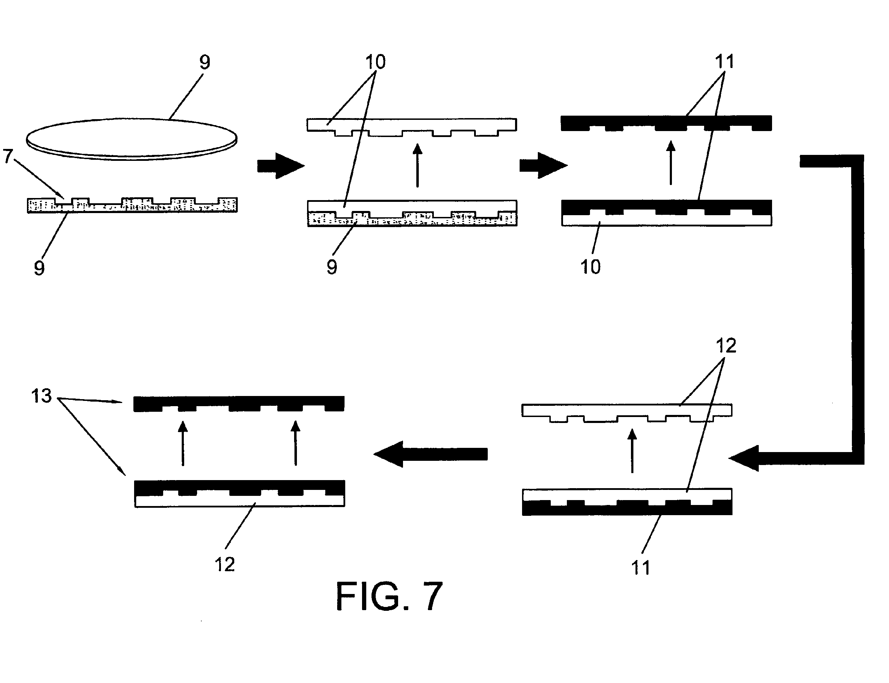

For this purpose, a lacquer that is uniformly spread on the entire surface, generally by means of centrifuging, is deposited on the crystal with a high degree of light transmission capacity (higher than 90%). The information of the data source medium is read byte by byte and transmitted in the form of laser pulses, on the lacquer deposited on the crystal, in such a way that said binary information is interpreted in the form of pits (7) on said lacquer (figure 7), either directly (by means of evaporation of the lacquer) or by subsequent developing (if the lacquer is photosensitive).

Then a metallized layer is applied, in such a way that the surface of the recorded crystal acquires conductive capacity, and all in such a way that the bytes are not stopped up by said metallized layer, in other words, the recorded crystal is metallized respecting the relief created during mastering. Then the electroforming process is carried out on the metallized crystal.

By means of the electroforming process, different pieces of nickel that serve as stamping matrixes in the manufacturing of the CD replicas are obtained. For this purpose the recorded and metallized crystal coming from mastering is used as the initial substrate of the process. Upon applying an electrolysis process on this metallized crystal, the nickel cations are deposited on the pits created in the mastering process (that contains the information of the original medium), in such a way that said pits are filled, obtaining a matrix (10) with a specific thickness that is called FATHER. Therefore, the information of the crystal is reflected on said FATHER as a negative copy of the information that was recorded in the lacquered and subsequently metallized crystal. In this way, the information that was previously made up on the lacquered crystal as pits, is now made up as hills.

The same electrolysis process is carried out on the FATHER, in such a way that the nickel cations deposit on the areas located in the hills and on the hills themselves, in such a way that when separating the piece created by this new electrolysis process, a matrix (11) that is named MOTHER is obtained. Therefore, the information that the FATHER had is reflected on said MOTHER as the negative copy, in such a way that it contains information identical to that on the lacquered and metallized crystal, in other words, in the form of pits.

The electrolysis process is applied successively on the MOTHER, obtaining negative copies (12) thereof, and in turn identical to the FATHER. These matrixes are named STAMPERS, which together with the FATHER, serve as the stamping matrix for injecting the CD-ROM disk (13) on the replication lines. This means that the final CD is a copy of the crystal and therefore a reverse copy of the FATHER or STAMPERS, but manufactured on polycarbonate or another plastic material of similar physical, optical and mechanical characteristics.

On the other hand, it should be pointed out that on the market there is equipment capable of reading information of a CD and recording it on a blank CD-ROM, in such a way that once an original disk is obtained, it is very easy to make an infinite number of copies thereof, for which purpose there is a direct reading of all the sectors of the source disk sequentially, and then the reading is recorded exactly on the blank disk.

These recorders are furthermore equipped with suitable software by means of which any (binary) logical error that the disks may have is automatically corrected, although this software is not capable of correcting severe physical errors.

In order to prevent copying of CD-ROMs and taking advantage of the operating itself of the recorders, the methodology of recording CD-ROM that consists of modifying the application program is known. For this purpose, the occurrence of logical errors in specific points is provided for, errors that, on the other hand, will not be reproducible in the fraudulently recorded CD-ROM, since the recorders automatically correct said errors. Therefore, a fraudulently obtained copy, when it is read, and as the expected error does not exist when it is read, the CD reader stops. These protective systems have the inconvenience that there are more and more programs capable of reproducing said errors, whereby the copy made fraudulently with these programs is completely functional, just like the original CD-ROM.

Given that the correction or logical or binary errors is simple, recording processes which include physical recording errors have been implemented, such as the case which is described in WO-A-97/15051, in which the pits are recorded in such a way that they have lengths different from the ones of the eight conventionally existing ones, in such a way that they cannot be decoded, which makes it difficult to copy them. However, the variation of the length of the pits only produces reading errors, but it does not cause the loss of the follow-up of the track.

WO-A-98/20492, which is used for the two-part from delimitation, describes a further copy protection method by making recording areas illegible.

### DESCRIPTION OF THE INVENTION

The CD-ROM recording of the invention, just like the conventional ones, comprises a suitable data medium in order to store the contents of a CD-ROM, the contents being comprised of at least an executable file, the application files, and the table of contents which is consulted by the executable file which establishes the order of execution of the application files.

The invention is characterized in that during said recording step, at least two file zones in which there is no application file are also recorded. These file zones include at least one file called the partially blocked file (for reasons which will be explained later one), that contains a code; and all of this in such a way that in the space comprised between the areas of the files any application file is recorded.

Another characteristic of the invention is the fact that, on the suitable data medium, a new executable file that comprises information for verifying the contents of at least a partially blocked file, is also recorded in positions different from the rest of the files.

A plurality of complementary files whose names are similar, semantically or orthographically, to those of the application files to be protected are also recorded preferably on the suitable medium, in order to create confusion in the presence of a hypothetical copy.

Then all the files recorded in the data medium are recorded on a lacquered crystal in a conventional manner according to the mastering process described in the "Background of the Invention".

Then some overwriting marks are made on the lacquered crystal by laser, on the file areas, in such a way that said marks coincide at least partially with the partially blocked files without affecting the code, in such a way that this overwriting determines the superposition of pits on the conventionally recorded pits, which produces an irregular surface which is illegible for a CD-ROM reader. Hence, they are called partially blocked files.

Once the overwriting has been carried out, then the crystal is metallized in order to obtain the successive replicate matrixes, such as FATHER and STAMPERS that were described in the "Background of the Invention" and that will serve to obtain a CD-ROM that constitutes a replica of the recorded and overwritten crystal, whereby in the event that an original CD-ROM is to be copied, when making the sequential reading of the files when the reader reaches the overwriting marks, the follow-up of the track of recorded information is lost, since the pits do not maintain a defined geometry and hence it is impossible to read them and therefore the sequential reading cannot continue which causes the reader to stop.

Therefore, copying of CD-ROM obtained by the method of the invention is impossible, since sequential reading cannot be carried out and the reader stops and thus the copy is not obtained.

It should be pointed out that the non-overwritten part of the partially blocked files is accessible, hence the interpretation of the partially blocked files can be carried out, by accessing the part that has not been overwritten, for which reason only the contents of the accessible part can be verified, but the file can never be copied, since, at least, one part of the file has been overwritten and, therefore, it will be impossible to read and therefore copy same, just as it has been described.

The overwriting marks can completely affect a file, except the partially blocked file, in such a way that said overwritten file could not be copied nor could its content be verified.

Therefore, it is important to make it clear that the overwriting marks can only affect the files unrelated to the original application to be protected and that these marks are not called by the original application, since otherwise, just like when an attempt to copy is made the loss of follow-up and focusing of the disk is produced, it could happen that when the file is used, there is a loss of follow-up and focusing of the disk, and therefore, the execution would be aborted.

The invention is applicable in those cases in which the number of application files is preferably higher than or equal to twenty, because it is a sufficient number so that there is confusion among the application files and the other files; and they occupy a size preferably less than 650 Mbytes, which is the maximum size recommended by the CD-ROM manufacturer.

The partially blocked files are preferably recorded as a first file of a zone, as the last file of a zone, or as the first and as the last file of a zone.

The code of the partially blocked file is preferably of at least 60 bits, in order to obtain sufficient security to prevent the code from being confused with a sequence of the application itself, and so that it also has a number of combinations sufficiently high so as to prevent said code from being easily obtained.

In a more preferred embodiment of the invention, the number of bits of the code of the partially blocked file is at least 80, in order to obtain a high degree of security.

At least an overwriting mark is recorded on each one of the file zones in one embodiment.

Advantageously the first zone includes a single overwriting mark and the second zone includes a variable number of marks whose number should not exceed the duration of the second zone and all of this in such a way that there is a minimum separation between the marks of 20 micra. All of this taking into account that the marks should partially affect the partially blocked file.

Furthermore, the minimum distance between the marks and the top and bottom limits of the zones should also be 20 micra.

The partially blocked file preferably has a minimum size of 1 Mbyte (1,048,576 bytes).

Just as it has been indicated, the partially blocked files coincide partially with the marks, in such a way that in the event that the partially blocked file is located as a first file of an zone, there should be a minimum distance between the end of the verification code and the beginning of the mark of at least 5 seconds, in order to prevent the overwriting from being able to affect the code.

In the event that the partially blocked file is located as the last file of the section, then there should also preferably be a minimum distance between the end of the mark and the beginning of the code of at least 5 seconds.

In the event that the partially blocked file is recorded as the first blocked file of a zone, the code is located between the first sector of the blocked file zone and the first sector of the overwritten mark.

On the contrary, in the event that the partially blocked file is arranged as the last blocked file of the zone, the code is located between the last sector of the file zone and the last sector of the overwritten mark.

The number of files to be blocked (totally or partially) is comprised between 1 and 7,000, and the contents thereof is defined by bytes, whose hexadecimal equivalent as conventionally known is comprised between the values 00 and FF, both inclusive, in other words, all values are permitted. Furthermore all values are also permitted in the so-called partially blocked file but with the difference that the code of at least 60 bits has a content known and provided for by the executable file responsible for carrying out the verification, just as it will be described later on, and which in no case will be overwritten.

The first of the file zones is preferably located in a position higher than 2 minutes, 30 seconds, 0 sectors, and in a position lower than 65 minutes, 0 seconds, 0 sectors.

The duration of the first zone should preferably be higher than 0 minutes, 15 seconds, 0 sectors and lower than 1 minute, 50 seconds, 0 sectors.

The second file zone is preferably located in a position higher than 4 minutes, 0 seconds, 0 sectors and in a position lower than 69 minutes, 0 seconds, 0 sectors. The duration of this second zone should preferably be higher than 0 minutes, 15 seconds, 0 sectors and lower than 5 minutes, 0 seconds, 0 sectors.

In the event of using a third, fourth, fifth, etc., file zone, the positions thereof are always located after the preceding zone, and the duration thereof will preferably be higher than 0 minutes, 15 seconds, 0 sectors and lower than 5 minutes, 0 seconds, 0 sectors.

Given that a sector is the minimum addressable unit in a CD-ROM, all the above-mentioned parameters are provided to prevent the file zones from affecting the table of contents and the executable files that are provided for at the beginning of the disk.

The invention also refers to a CD-ROM disk recorded according to the described method, and to the reading process of the disk.

A playing process, by means of which on the unit itself where the application is executed, which will always be a CD, is required for the recognition of the disk. First of all, the reading of the executable file is carried out by means of which the verification of the partially blocked files is carried out, for which purpose the programming of the executable file verifies first of all the existence of the partially blocked file, in such a way that if said partially blocked file does not exist the execution of the program is aborted. In the event that the partially blocked file exists, the binary opening of said file takes place, whereby the position where the header of the partially blocked file is located will be obtained, and the reading pointer will go to this position. At this point it should be remembered that conventionally there are two ways to open a file: in the text mode and in the binary mode. In the text mode there are certain reserved bytes, such as the file end; and in the binary mode the entire contents is read in such a way that the file end is not searched for in such a way that it is prevented that a byte can be interpreted as a file end.

Then, and given that the position of the code is known previously by the executable file, movement is made from said first header of the partially blocked file to the position where the code is located. The code is read at this point and it is verified that it corresponds to a specific sequence. Then the value of the reading pointer is restored, closing the access to the partially blocked file.

In the event that the code read is correct, an indicative value meaning that the application is going to be conventionally executed, is generated, and prior to said execution the entire verification mechanism (executable file) is unloaded from the memory of the reader. On the contrary, if the code read does not coincide with the specific sequence, a value that makes the application execution abort is generated.

This entire function is implicit in the contents of the executable file of the invention.

In this way it is verified that the executed disk is original.

Therefore, the method of the invention combines the making of overwriting marks that allow the reading of the CD-ROM at certain points, with the generation of partially blocked files, that partially coincide in their location in the volume with the laser overwriting marks, for which reason no file whose execution is expected by the application to be protected is affected by the overwriting. Furthermore, not all the information in the partially blocked files is accessible, for which reason they cannot be copied, just as it has already been commented.

In any case, by means of the method of the invention no navigation program by the disk that avoids the protective overwriting marks is included, except the one defined by the normal execution flow of the computer application that is the object of protection in each case, and files that do not belong to this application are not called.

Hereinafter to provide a better understanding of this specification and forming an integral part thereof, a series of figures in which the object of the invention has been represented in an illustrative and non-restrictive manner are accompanied.

### BRIEF DESCRIPTION OF THE FIGURES

Figure 1 is a schematic view of a possible embodiment of recording according to the method of the invention.
Figure 2 shows an embodiment of recording of a partially blocked file as the last file of a file zone.
Figure 3 shows an embodiment of recording wherein the partially blocked file is located as the first file of a file zone.
Figure 4 shows a possible embodiment of the recording structure of a partially blocked file.
Figure 5 partially shows the relief of a crystal lacquered and recorded according to a conventional mastering process. This relief coincides with the one of the CD-ROM that is recorded from the crystal, just as it was explained in the "Background of the Invention".
Figure 6 shows the same relief of the preceding figure, on which an overwriting mark has been made.
Figure 7 schematically shows the conventional electroforming process in order to obtain CD-ROM disks from the mastering process which was described in the "Background of the Invention".

### DESCRIPTION OF AN EMBODIMENT OF THE INVENTION

A description is made hereinafter of the invention based on the above-cited figures.

First of all, a valid medium (CD-R, Exabyte, hard disk) for storing the contents of a CD-ROM is arranged, in such a way that the application files, table of contents and executable file that handles the table of contents in order to establish the order of execution of the application files are recorded in a conventional manner.

Furthermore, by means of the method of the invention, the novelty of recording F files not involved in the application during at least two zones of the disk, which are called file zones (T1 and T2), is included.

A partially blocked file (PBF) that includes a known code (5) should be placed at the beginning or at the end of at least one of the file zones (T1, T2).

Files not involved in the application are located on the entire extension of the zones (T1 and T2) and a file belonging to the original application is never located there. Furthermore, an application file is located between file zones (T1 and T2).

Furthermore, a new executable file (not represented in the figures) that comprises verification information of the contents of the (PBF) is recorded in positions different from the rest of the files. This file is the first one to be read when the CD-ROM is interpreted.

A plurality of complementary files (not represented in the figures), whose names and extensions are similar to those of the application files to be protected, but not belonging to it, is also recorded. The names are semantically and orthographically similar, and furthermore since they have extensions similar to those of the application files, enough confusion can be created in the event that an attempt is made to ascertain which are application files and which are not.

All of this information stored in the medium is recorded on the lacquered crystal (9) by means of a conventional mastering process.

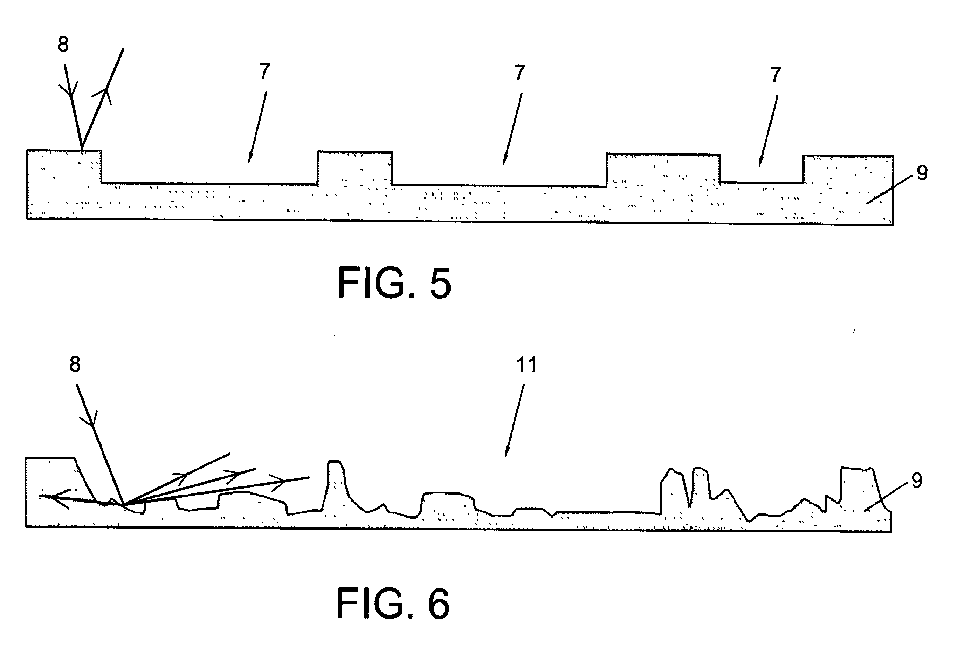

The recording carried out on the crystal (9) has the appearance that is shown in figure 5, in such a way that the information is recorded by means of pits (7) that were described in the "Background of the Invention", and that should maintain a defined and regular geometry that adopt eight possible different lengths. An in-depth description thereof is not made since it is well-known and because it is not the object of the invention.

Once the recording of the different files on the file zones (T1 and T2) has been carried out, some laser marks (M1, M2 and M3) are made by means of overwriting, in such a way that the pits (7) are deformed, the crystal (9) adopting an irregular surface (11) like the one shown in figure 6.

The different CD-ROMs are manufactured by means of a conventional electroforming process, in such a way that the manufactured CD-ROMs have a surface identical to that of the crystal (9), but with the difference that they are manufactured out of plastic or polycarbonate material.

Therefore, in the event of a possible copy of the CD-ROM, as the laser (8) strikes the irregular surface defined by the marks, different reflections that cannot be interpreted in any way by the reader, are produced. Given that when copying a CD-ROM, the different files are read sequentially just as they are in the original CD-ROM, when the reader reaches the marks, and as they cannot be interpreted, it stops, which determines that in no way can the CD-ROM be copied.

The mark generating source is a laser with a wave length between 450 and 525 nanometers with a power between 10 and 50 mW.

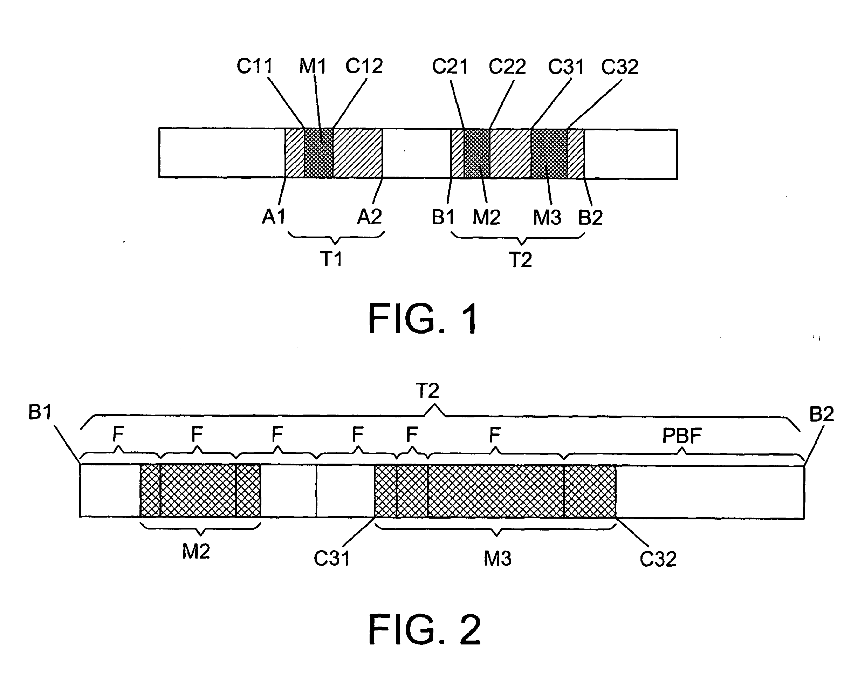

In the embodiment of figure 1, two file zones (T1 and T2) have been recorded. In the first one of them a single mark (M1) has been made, while two marks (M2 and M3) have been made in the second zone (T2).

The files arranged in zones (T1 and T2) are between 2 and 7,000 and the contents thereof is defined by bytes whose hexadecimal equivalent is between the values of 00 and FF, both inclusive, in such a way that none of the original application files to be protected will be located in said zones.

Zone (T1) is defined by the limits (A1 and A2). Point (A1) can be located from a position higher than 2 minutes, 30 seconds, 0 sectors, and never in a previous position, given that on the contrary the CD-ROM volume identifier and the table of contents could be affected. The table of contents stores the positions and the sizes of all the files recorded in the CD-ROM and the files are handled by the executable file to define the order in which the different application files are executed.

Point (A2) defines the top limit of zone (T1) and can reach 65 minutes, 0 seconds, 0 sectors.

The bottom limit (B1) of zone (T2) is located in a position higher than 4 minutes, 0 seconds, 0 sectors. The top limit defined by point (B2) could reach 69 minutes, 0 seconds, 0 sectors.

The separation between (A2), that represents the top limit of the first zone (T1) and (B1) that represents the beginning or bottom limit of the second zone (T2), should be a minimum of 1 minute, 0 seconds, 0 sectors, and just as it has been stated above, at least one application file should be included in this separation.

The separation between (A1 and A2), in other words, the duration of the first zone (T1) corresponds to a minimum duration of 1 minute, 15 seconds, 0 sectors, and a maximum duration of 5 minutes, 0 seconds, 0 sectors.

Regarding the characteristics of the marks (M1-M3), there should be a minimum separation of 20 micra between the limits of the zones (T1) and the overwriting marks, in other words, the distance (A2-C12, B1-C21, B2-C32) should be greater than or equal to 20 micra.

There will be a minimum separation of 20 micra between marks (M2 and M3) of the second zone (T2). This separation corresponds to the separation (C22-C31).

There can be any number of marks in the second zone (T2), as long as they comply with these above-mentioned minimum distances. The number of marks of the second zone will be between 1 and 6 in a preferred embodiment.

The number of files similar to the application is included in a number between 1 and 7,000 and the contents thereof is defined by bytes whose hexadecimal equivalent is between the values 00 and FF, both inclusive. These files, just as it has been described above, are syntacti-cally and orthographically similar to the application files, but not identical to them, so that if an attempt of copying is made it will be difficult for the user to distinguish and separate the application files from those that are not application files. The physical location of these files is not fixed.

A fundamental characteristic of the invention is that the partially blocked file (PBF) should partially coincide with any of the marks (M1-M3). Furthermore, the partially blocked files are recorded as the first file of the zone (T1 or T2) (or else in a possible third, fourth, fifth zone, etc. in the event that there are such zones) or else as the last file of a zone.

The minimum size of a PBF is 1 Mbyte.

Figure 2 shows in greater detail the file zone (T2) and the PBF has been placed in it as the last file of zone (T2).

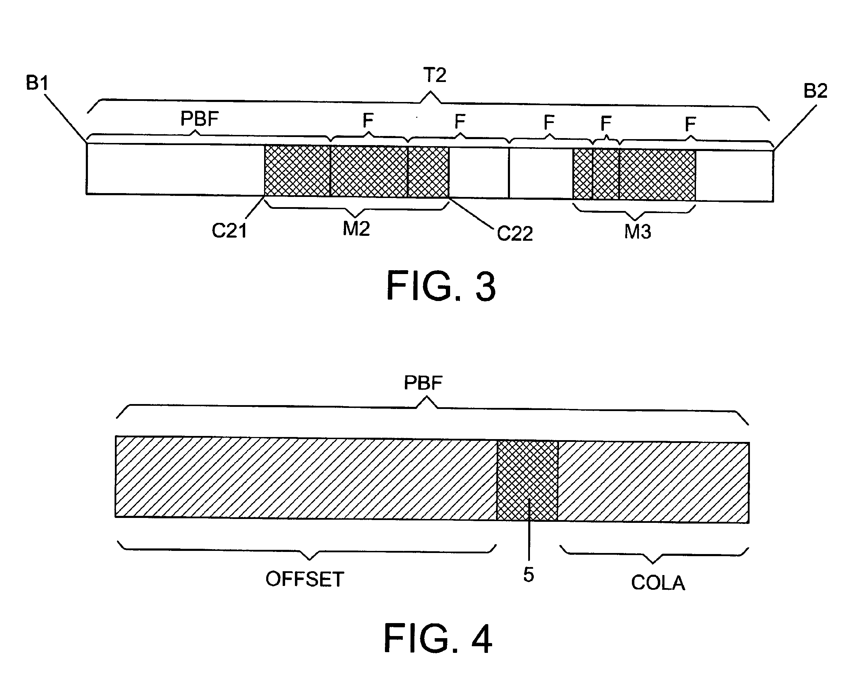

Likewise, figure 3 also shows the file zone (T2), but with the difference that the PBF is located as the first file of zone (T2).

The code (5) of the partially blocked file (PBF) is of at least 80 bits, and in the case of the embodiment of figure 3, it is located between the first sector of the file (PBF) and the first sector of the mark (M2); whereas in the embodiment of figure 2 it is located between the last sector of the file (PBF) and the last sector of the mark (M3). The distance, in bytes, between the first byte of the file and the code (5) is named OFFSET and the distance between the end of code (5) and the end of the file is named TAIL, just as it is shown in figure 4.

The described configuration of the CD-ROM requires a reading process different from the conventional ones, which begins with the execution of the executable file by means of which the PBF is verified, which carries out the following operations:
1.- The existence of the PBF is verified first of all.
2.- If the file does not exist, the execution of the program is aborted. In the event that the PBF file exists, the binary opening of said partially blocked file will take place.
3.- The reading pointer is moved in a number of units equal to OFFSET and the coincidence of the code (5) with a specific sequence provided for is verified.
4.- If the verification code does not coincide with the one provided for the execution of the program is aborted. On the contrary, the reading pointer is restored and access to the partially blocked file is closed and then the memory of the reader of the executable file is released and the conventional execution of the original application is permitted.

The coincidence between the PBF code and the one provided for in the verification mechanism is indicated with a number value between 0000 and FFFF, from which the function of the program responsible for the comparison will indicate said coincidence in the comparison. If the comparison were not correct then a value different from the one provided for for the correct comparison would be offered, which will indicate that the execution of the application to be protected should be aborted.

## Claims

1. Method for CD-ROM recording preventing copying thereof, wherein on a suitable data medium for storing in a mastering process the contents of a CD-ROM, said contents comprising at least one executable file, application files, a table of contents that is consulted by the executable file which establishes the order of execution of the application files are recorded, wherein
Recording is performed in non-contiguous zones of at least two files (T1, T2) on the suitable data medium which are separated by at least one application file,
**characterized in that**:
- Recording of a code (5) within one of file (T1, T2),
- Overwriting marks (M1, M2, M3) at the free space of the at least two files (T1, T2), the free space is the space not used by the code (5), producing an irregular and illegible surface (11), and
- Recording on the suitable data medium a new executable file including identifier addresses to get and verify said recorded code at a part of a file (T1, T2).

2. Method for recording, according to claim 1, **characterized in that** the code (5) is recorded at the beginning of one file (T1, T2) being each file a partially blocked file (T1, T2).

3. Method for recording, according to claim 1, **characterized in that** the code (5) is recorded at the ending of one file (T1, T2).

4. Method for recording, according to claim 1, **characterized in that** the code (5) is recorded at each file (T1, T2).

5. Method for recording, according to claim 1, **characterized in that** the recorded code (5) is of at least 60 bits.

6. Method for recording, according to claim 5, **characterized in that** the recorded code (5) is of at least 80 bits.

7. Method for recording, according to claim 1, **characterized in that** the file (T1, T2) has a minimum size of 1 Mbyte.

8. Method for recording, according to claim 1, **characterized in that** the minimum separation between the recorded code and the beginning of one mark is of at least 5 seconds.

9. Method for recording, according to claim 1, **characterized in that** the minimum separation between the end of one mark and the beginning of the recorded code is of at least 5 seconds.

10. Method for recording, according to claims 1, **characterized in that** the recorded code (5) is located between the first sector of the file (T1, T2) and the first sector of the overwriting mark made in the file (T1, T2).

11. Method for recording, according to claims 1, **characterized in that** the recorded code (5) is located between the last sector of the file (T1, T2) and the last sector of the overwriting mark made in the file (T1, T2).

12. Method for recording, according to claim 1, **characterized in that** the overwriting marks also coincide partially or totally with the different files included in file (T1, T2).

13. CD-ROM recorded by the method according to any of the preceding claims.

14. Method for reading a CD-ROM, recorded by the method according to any of claims 1 to 12, **characterized in that** the existence of a partially blocked file is verified and if there is no such file the reader stops, whereas if there is such a file,
- the reading pointer moves to a number of units equal to the distance between the first sector of partially blocked files and the beginning of code (5) (OFFSET);
- a verification of whether code (5) coincides with a specific sequence is carried out;
- the value of the reading pointer is restored and the accessed file is closed;
- in the event that said code (5) coincides with the predetermined sequence, an indicative value of the conventional execution of the application is generated, after having unloaded the verification program of the partially blocked file from the reader memory;
- in the event that said code does not coincide, a value that will be used to abort the execution of the application is generated.

## Patentansprüche

1. Verfahren zum Aufzeichnen einer CD-ROM, das ein Kopieren derselben verhindert, wobei auf einem geeigneten Datenmedium zur Speicherung in einem Mastering-Prozess die Inhalte einer CD-ROM aufgezeichnet werden, wobei die Inhalte wenigstens eine ausführbare Datei, Anwendungsdateien, ein Inhaltsverzeichnis, das durch die ausführbare Datei herangezogen wird, die die Reihenfolge der Ausführung der Anwendungsdateien festlegt, aufweisen, wobei
das Aufzeichnen in nicht zusammenhängenden Bereichen wenigstens zweier Dateien (T1, T2) auf dem geeigneten Datenmedium durchgeführt wird, die durch wenigstens eine Anwendungsdatei voneinander getrennt sind,
**gekennzeichnet durch**:
- Aufzeichnen eines Codes (5) in einer der Dateien (T1 T2),
- Überschreiben von Markierungen (M1, M2, M3) in dem freien Raum der wenigstens zwei Dateien (T1, T2), wobei der freie Raum der Raum ist, der **durch** den Code (5) nicht verwendet wird, so dass eine unregelmäßige und unlesbare Oberfläche (11) erzeugt wird, und
- Aufzeichnen einer neuen ausführbaren Datei auf dem geeigneten Datenmedium, die Identifizierungsadressen enthält, um den aufgezeichneten Code in einem Teil einer Datei (T1, T2) zu erhalten und zu verifizieren.

2. Verfahren zum Aufzeichnen gemäß Anspruch 1, **dadurch gekennzeichnet, dass** der Code (5) an dem Anfang einer Datei (T1, T2) aufgezeichnet wird, wobei jede Datei eine teilweise blockierte Datei (T1, T2) ist.

3. Verfahren zum Aufzeichnen gemäß Anspruch 1, **dadurch gekennzeichnet, dass** der Code (5) an dem Ende einer Datei (T1, T2) aufgezeichnet wird.

4. Verfahren zum Aufzeichnen gemäß Anspruch 1, **dadurch gekennzeichnet, dass** der Code (5) in jeder Datei (T1, T2) aufgezeichnet wird.

5. Verfahren zum Aufzeichnen gemäß Anspruch 1, **dadurch gekennzeichnet, dass** der aufgezeichnete Code (5) aus wenigstens 60 Bits besteht.

6. Verfahren zum Aufzeichnen gemäß Anspruch 5, **dadurch gekennzeichnet, dass** der aufgezeichnete Code (5) aus wenigstens 80 Bits besteht.

7. Verfahren zum Aufzeichnen gemäß Anspruch 1, **dadurch gekennzeichnet, dass** die Datei (T1, T2) eine minimale Größe von 1 Mbyte aufweist.

8. Verfahren zum Aufzeichnen gemäß Anspruch 1, **dadurch gekennzeichnet, dass** der minimale Trennabstand zwischen dem aufgezeichneten Code und dem Anfang einer Markierung wenigstens 5 Sekunden beträgt.

9. Verfahren zum Aufzeichnen gemäß Anspruch 1, **dadurch gekennzeichnet, dass** der minimale Trennabstand zwischen dem Ende einer Markierung und dem Anfang des aufgezeichneten Codes wenigstens 5 Sekunden beträgt.

10. Verfahren zum Aufzeichnen gemäß Anspruch 1, **dadurch gekennzeichnet, dass** der aufgezeichnete Code (5) zwischen dem ersten Sektor der Datei (T1, T2) und dem ersten Sektor der überschreibenden Markierung, die in der Datei (T1, T2) geschaffen ist, angeordnet ist.

11. Verfahren zum Aufzeichnen gemäß Anspruch 1, **dadurch gekennzeichnet, dass** der aufgezeichnete Code (5) zwischen dem letzten Sektor der Datei (T1, T2) und dem letzten Sektor der überschreibenden Markierung, die in der Datei (T1, T2) geschaffen ist, angeordnet ist.

12. Verfahren zum Aufzeichnen gemäß Anspruch 1, **dadurch gekennzeichnet, dass** die überschreibenden Markierungen auch teilweise oder vollständig mit den unterschiedlichen Dateien, die in der Datei (T1, T2) enthalten sind, zusammenfallen.

13. CD-ROM, die durch das Verfahren gemäß einem beliebigen der vorhergehenden Ansprüche aufgezeichnet worden ist.

14. Verfahren zum Aufzeichnen einer CD-ROM, die durch das Verfahren gemäß einem beliebigen der Ansprüche 1 bis 12 aufgezeichnet wird, **dadurch gekennzeichnet, dass** die Existenz einer teilweise blockierten Datei verifiziert wird, und dass, wenn keine derartige Datei existiert, die Leseeinrichtung stoppt, während in dem Fall, dass eine derartige Datei existiert,
- der Lesezeiger zu einer Anzahl von Einheiten übergeht, die gleich dem Abstand zwischen dem ersten Sektor der teilweise blockierten Dateien und dem Beginn des Codes (5) (OFFSET) ist;
- eine Verifikation, ob der Code (5) mit einer spezifischen Sequenz übereinstimmt, durchgeführt wird;
- der Wert des Lesezeigers zurückgespeichert und die zugegriffene Datei geschlossen wird;
- in dem Falle, dass der Code (5) mit der vorbestimmten Sequenz übereinstimmt, ein für die herkömmliche Ausführung der Anwendung kennzeichnender Wert erzeugt wird, nachdem das Verifikationsprogramm der teilweise blockierten Datei aus dem Speicher der Leseeinrichtung geladen worden ist;
- in dem Falle, dass der Code nicht übereinstimmt, ein Wert erzeugt wird, der verwendet wird, um die Ausführung der Anwendung abzubrechen.

## Revendications

1. Procédé d'enregistrement de CD-ROM, permettant d'en éviter la copie, sur un support de données approprié pour stocker le contenu d'un CD-ROM au cours d'un processus de matriçage, ledit contenu comprenant au moins un fichier exécutable, des fichiers d'application, une table des matières qui est consultée par le fichier exécutable qui établit l'ordre d'exécution dans lequel les fichiers d'application sont enregistrés, avec lequel l'enregistrement est effectué dans des zones non contiguës d'au moins deux fichiers (T1, T2) sur le support de données approprié qui sont séparés par au moins un fichier d'application,
**caractérisé par** :
- l'enregistrement d'un code (5) dans un des fichiers (T1, T2),
- l'écrasement des marques (M1, M2, M3) dans l'espace libre d'au moins deux fichiers (T1, T2), l'espace libre étant l'espace non utilisé par le code (5), produisant une surface irrégulière et illisible (11), et
- l'enregistrement sur le support de données approprié d'un nouveau fichier exécutable comprenant des adresses d'identificateur pour obtenir et vérifier ledit code enregistré en tant que partie d'un fichier (T1, T2).

2. Procédé d'enregistrement, selon la revendication 1, **caractérisé en ce que** le code (5) est enregistré au début d'un fichier (T1, T2), chaque fichier étant un fichier partiellement bloqué (T1, T2).

3. Procédé d'enregistrement, selon la revendication 1, **caractérisé en ce que** le code (5) est enregistré à la fin d'un fichier (T1, T2).

4. Procédé d'enregistrement, selon la revendication 1, **caractérisé en ce que** le code (5) est enregistré dans chaque fichier (T1, T2).

5. Procédé d'enregistrement, selon la revendication 1, **caractérisé en ce que** le code enregistré (5) comprend au moins 60 bits.

6. Procédé d'enregistrement, selon la revendication 5, **caractérisé en ce que** le code enregistré (5) comprend au moins 80 bits.

7. Procédé d'enregistrement, selon la revendication 1, **caractérisé en ce que** le fichier (T1, T2) a une taille minimale de 1 mégaoctet.

8. Procédé d'enregistrement, selon la revendication 1, **caractérisé en ce que** la séparation minimale entre le code enregistré et le début d'une marque dure au moins 5 secondes.

9. Procédé d'enregistrement, selon la revendication 1, **caractérisé en ce que** la séparation minimale entre la fin d'une marque et le début du code enregistré dure au moins 5 secondes.

10. Procédé d'enregistrement, selon la revendication 1, **caractérisé en ce que** le code enregistré (5) est situé entre le premier secteur du fichier (T1, T2) et le premier secteur de la marque d'écrasement faite dans le fichier (T1, T2).

11. Procédé d'enregistrement, selon la revendication 1, **caractérisé en ce que** le code enregistré (5) est situé entre le dernier secteur du fichier (T1, T2) et le dernier secteur de la marque d'écrasement faite dans le fichier (T1, T2).

12. Procédé d'enregistrement, selon la revendication 1, **caractérisé en ce que** les marques d'écrasement coïncident également en partie ou en totalité avec les différents fichiers compris dans le fichier (T1, T2).

13. CD-ROM enregistré suivant le procédé selon l'une quelconque des revendications précédentes.

14. Procédé de lecture d'un CD-ROM, enregistré suivant le procédé selon l'une quelconque des revendications 1 à 12, **caractérisé en ce que** l'existence d'un fichier partiellement bloqué est vérifié et que si un tel fichier n'est pas présent, le lecteur s'arrête, tandis que si un tel fichier est présent,
- le pointeur de lecture se déplace d'un nombre d'unités égal à la distance entre le premier secteur des fichiers partiellement bloqués et le début du code (5) (OFF-SET) ;
- il est vérifié si le code (5) coïncide avec une séquence spécifique ;
- la valeur du pointeur de lecture est restaurée et le fichier accédé est fermé ;
- dans le cas où ledit code (5) coïncide avec la séquence prédéterminée, une valeur indicative de l'exécution conventionnelle de l'application est générée, après avoir déchargé le programme de vérification du fichier partiellement bloqué de la mémoire du lecteur ;
- dans le cas où ledit code ne coïncide pas, une valeur qui sera utilisée pour annuler l'exécution de l'application est générée.
